# DEMANDE DE BREVET EUROPEEN

(11) **EP 2 743 676 A1**
(43) Date de publication de la demande: **18.06.2014**
(21) Numéro de dépôt: 13195898.5
(22) Date de dépôt: 05.12.2013
(51) Int. Cl.: G01N 21/25, G01N 21/64

(54) **Dispositif lecteur de microplaques**

(30) Priorité: 11.12.2012 FR 1261887
(71) Demandeur: Envolure, 34790 Grabels (FR)
(72) Inventeur: Muller, Mathieu, 34000 Montpellier (FR); Lorente, Florent, 34500 Beziers (FR); Dudal, Yves, 68220 Hegenheim (FR)
(74) Mandataire: Pontet Allano & Associes

(57) **Abrégé**

La présente invention concerne un dispositif pour effectuer des mesures optiques telles que des mesures de fluorescence et d'absorbance sur des échantillons répartis selon des sites de mesure (2) sur un support (1), comprenant des premiers et des seconds moyens d'illumination (16, 10), des moyens de détection optique (7, 8), des premières et des secondes fibres optiques (3, 5) avec une extrémité disposée en regard des sites de mesure (2) selon respectivement une première et une seconde face du support (1), lequel dispositif comprenant en outre des moyens de configuration optique (9, 14) configurables de telle sorte à permettre la configuration suivante: (i) couplage optique des premiers moyens d'illumination (16) avec les premières fibres optiques (3) et des moyens de détection optique (7, 8) avec les secondes fibres optiques (5), et au moins l'une des configurations suivantes: (ii) couplage optique des seconds moyens d'illumination (10) et des moyens de détection optique (7, 8) avec les secondes fibres optiques (5), (iii) couplage optique des seconds moyens d'illumination (10) et des moyens de détection optique (7, 8) avec les premières fibres optiques (3).

L'invention concerne aussi un procédé mis en oeuvre dans ce dispositif.

## Description

### Domaine technique

La présente invention concerne un dispositif lecteur de microplaques pour la réalisation de mesures optiques telles que des mesures de fluorescence ou d'absorbance sur des échantillons.

Le domaine de l'invention est plus particulièrement mais de manière non limitative celui des dispositifs d'analyse par méthodes optiques pour des applications dans les domaines de l'environnement, la biologie, et/ou la chimie.

### Etat de la technique antérieure

Les techniques de mesure optique, telles que des mesures de fluorescence et/ou d'absorbance, sont largement utilisées dans les domaines de l'environnement, la biologie et la chimie notamment.

Il est connu de conditionner les échantillons à analyser dans des plaques comprenant une pluralité de puits, ce qui permet une manipulation aisée et des dosages également facilités. Ces plaques peuvent par exemple prendre la forme de microplaques de format normalisé avec 96 puits.

Ces microplaques sont couramment utilisées en laboratoire.

Elles ont également l'avantage de permettre la production de kits d'analyse prêts à être utilisés, même par des opérateurs non spécialistes.

Dans le domaine de l'environnement par exemple, ces kits peuvent être utilisés pour caractériser des eaux usées et/ou les déchets solides afin d'optimiser leur traitement et leur valorisation.

Les kits d'analyse peuvent par exemple être fournis sous la forme de microplaques à 96 puits qui contiennent déjà tous les réactifs nécessaires pour que les utilisateurs (industriels, collectivités, agriculteurs, ...) en charge du traitement des effluents ou des déchets puissent réaliser par eux-mêmes, au plus près de leurs installations et de façon simple rapide et économique, la caractérisation de leurs intrants. Les utilisateurs doivent simplement remplir les puits avec les échantillons à analyser qui se mélangent ainsi avec les réactifs, et insérer la microplaque dans un lecteur de microplaque qui effectue les mesures de manière automatisée.

Pour ce type d'applications, il est donc essentiel de disposer d'un lecteur de microplaques adapté.

Les lecteurs de microplaques existants conviennent en général pour des utilisations fixes en laboratoire ou sur des sites industriels équipés. Ils sont par contre mal adaptés pour effectuer des mesures sur le terrain ou pour équiper des sites industriels minimalistes, car ils sont en général trop encombrants, lourds et ils nécessitent un raccordement électrique.

En outre, certains lecteurs de microplaques ne peuvent faire que des mesures d'absorbance (en transmission) ou de fluorescence (en réflexion), ce qui nécessite l'utilisation de plusieurs équipements pour effectuer les deux types de mesures.

De manière classique, les lecteurs de microplaques sont basés sur un principe de mesure séquentiel. La microplaque est déplacée relativement à une tête de mesure optique, de manière à positionner cette tête de mesure successivement en regard de chaque puits. Même si un certain degré de parallélisme est parfois introduit, ces lecteurs restent volumineux, relativement lents et onéreux.

On connaît également le document US 4,968,148 de Chow et al. qui décrit un lecteur dans lequel la microplaque est fixe par rapport au système de mesure. Le système d'illumination comprend un faisceau de fibres optiques qui amènent la lumière d'une source vers les puits de la microplaque. La détection est effectuée par une pluralité de détecteurs, à raison d'un par puits. Ce système ne permet donc que des mesures d'absorbance, en transmission. En outre, la mesure reste séquentielle car la lumière est injectée dans les fibres du faisceau séquentiellement.

La présente invention a pour but de proposer un lecteur de microplaques mieux adapté à une utilisation avec des kits d'analyse notamment, qui résolvent les problèmes de l'art antérieur.

La présente invention a également pour but de proposer un lecteur de microplaques polyvalent et adapté à une utilisation avec une variété de réactifs et/ou de kits d'analyse, qui permette avec un minimum de manipulations d'effectuer des mesures d'absorbance et de fluorescence à des longueurs d'ondes variées.

La présente invention a enfin pour but de proposer un lecteur de microplaques compact, adapté à une utilisation mobile éventuellement en autonomie électrique, robuste, et pratique à utiliser même par un opérateur non spécialiste.

### Exposé de l'invention

Cet objectif est atteint avec un dispositif pour effectuer des mesures optiques telles que des mesures de fluorescence et d'absorbance sur des échantillons répartis selon des sites de mesure sur un support, comprenant :
- des premiers moyens d'illumination,
- des moyens de détection optique,
- des premières fibres optiques avec une extrémité disposée en regard des sites de mesure selon une première face du support,
caractérisé en ce qu'il comprend en outre :
- des seconds moyens d'illumination,
- des secondes fibres optiques avec une extrémité disposée en regard desdits sites de mesure selon une seconde face du support opposée à la première face, et
- des moyens de configuration optique configurables de telle sorte à permettre la configuration suivante :
   (i) couplage optique des premiers moyens d'illumination avec les premières fibres optiques et des moyens de détection optique avec les secondes fibres optiques,
      et au moins l'une des configurations suivantes :
   (ii) couplage optique des seconds moyens d'illumination et des moyens de détection optique avec les secondes fibres optiques,
   (iii) couplage optique des seconds moyens d'illumination et des moyens de détection optique avec les premières fibres optiques.

La première face du support peut être une face supérieure ou inférieure suivant la convention utilisée.

La configuration (i) permet notamment d'effectuer des mesures d'absorbance, en transmission.

La configuration (ii) permet notamment d'effectuer des mesures de fluorescence en réflexion, en accédant aux échantillons du côté de la seconde face du support.

La configuration (iii) permet notamment d'effectuer des mesures de fluorescence en réflexion, en accédant aux échantillons du côté de la première face du support.

Suivant des modes de réalisation, les moyens de configuration optique peuvent comprendre un élément de couplage mobile supportant les premiers moyens d'illumination et des moyens optiques de renvoi, lequel élément de couplage mobile étant apte à se déplacer de telle sorte que :
- dans une première position, les premiers moyens d'illumination sont couplés optiquement avec les premières fibres optiques, et les moyens de détection optique sont couplés optiquement avec les secondes fibres optiques par l'intermédiaire des moyens optiques de renvoi ;
- dans une seconde position, les moyens de détection optique sont couplés optiquement avec lesdites premières fibres optiques par l'intermédiaire des moyens optiques de renvoi.

En outre, dans la seconde position les premiers moyens d'illumination peuvent être découplés des premières fibres optiques.

Lorsque l'élément de couplage mobile est dans la première position, il est en particulier possible d'effectuer des mesures d'absorbance en transmission, et des mesures de fluorescence en réflexion en accédant aux échantillons du côté de la seconde face du support.

Lorsque l'élément de couplage mobile est dans la seconde position, il est en particulier possible d'effectuer des mesures de fluorescence en réflexion en accédant aux échantillons du côté de la première face du support.

Suivant des modes de réalisation :
- les premières et les secondes fibres optiques peuvent être respectivement regroupées sous forme de faisceau du côté des moyens de configuration optique ;
- les moyens de détection optique peuvent comprendre un détecteur matriciel apte à collecter la lumière issue des premières ou des secondes fibres optiques ;
- les premiers moyens d'illumination peuvent comprendre une source de type diode électroluminescente (DEL), ou une pluralité de sources de type diode électroluminescente (DEL) couplées par un barreau optique d'homogénéisation ;
- les moyens de configuration optique peuvent comprendre en outre au moins un module d'éclairage apte à être inséré devant les moyens de détection optique, lequel module comprenant des seconds moyens d'illumination, et un élément partiellement réfléchissant apte à (i) transmettre au moins une partie de la lumière desdits seconds moyens d'illumination vers les moyens de couplage et (ii) transmettre au moins une partie de la lumière issue des moyens de couplage vers les moyens de détection optique ;
- l'élément partiellement réfléchissant peut comprendre un élément dichroïque ;
- les seconds moyens d'illumination peuvent comprendre une source de type diode électroluminescente (DEL), ou une pluralité de sources de type diode électroluminescente (DEL) couplées par un barreau optique d'homogénéisation ;
- le dispositif selon l'invention peut comprendre une pluralité de modules d'éclairage, et des moyens pour changer ou retirer le module d'éclairage inséré entre les moyens de détection optique et les moyens de couplage optique.

Suivant des modes de réalisation,
- le dispositif selon l'invention peut être adapté à l'utilisation de supports de type microplaque à 96 puits constituant les sites de mesure. Il peut être en particulier adapté à l'utilisation de supports de type microplaque à 96 puits opaques, transparents, opaques à fond transparent, à fond plat, conique ou arrondi, en polystyrène, polypropylène, verre ou tout autre matériau ;
- le dispositif selon l'invention peut être adapté à l'utilisation de supports de type microplaque à 6, 12, 24, 48, 96 et/ou 384 puits, en tous matériaux, de toutes couleurs et de toutes formes.
- le dispositif selon l'invention peut être adapté à l'utilisation de plaques avec des puits profonds, de type « deepwell ».

Il peut comprendre en outre des moyens pour identifier des microplaques issues de kits prédéfinis.

Le dispositif selon l'invention peut comprendre en outre :
- des moyens d'agitation du support et/ou des moyens de chauffage du support ;
- des moyens d'alimentation électrique autonomes de type batterie.

Suivant un autre aspect, il est proposé un procédé pour effectuer des mesures optiques telles que des mesures de fluorescence et d'absorbance sur des échantillons répartis selon des sites de mesure sur un support, mettant en oeuvre des premiers moyens d'illumination, des moyens de détection optique, des premières fibres optiques avec une extrémité disposée en regard des sites de mesure selon une première face du support, des seconds moyens d'illumination, des secondes fibres optiques avec une extrémité disposée en regard desdits sites de mesure selon une seconde face du support opposée à la première face, et des moyens de configuration optique,
lequel procédé comprend des opérations de configuration des moyens de configuration optique, de sorte à réaliser la configuration suivante :
(i) couplage optique des premiers moyens d'illumination avec les premières fibres optiques et des moyens de détection optique avec les secondes fibres optiques,
   et au moins l'une des configurations suivantes :
(ii) couplage optique des seconds moyens d'illumination et des moyens de détection optique avec les secondes fibres optiques,
(iii) couplage optique des seconds moyens d'illumination et des moyens de détection optique avec les premières fibres optiques.

Suivant des modes de mise en oeuvre, en particulier pour effectuer des mesures d'absorbance, le procédé selon l'invention peut comprendre des étapes :
- d'illumination des échantillons au moyen des premiers moyens d'illumination couplés dans les premières fibres optiques, et
- de mesure avec les moyens de détection optique de la lumière transmise au travers des échantillons et couplée dans les secondes fibres optiques.

Suivant des modes de mise en oeuvre, en particulier pour effectuer des mesures de fluorescence, le procédé selon l'invention peut comprendre des étapes :
- d'illumination à une longueur d'onde d'excitation des échantillons au moyen des seconds moyens d'illumination couplés dans les premières ou les secondes fibres optiques,
- de mesure avec les moyens de détection optique de la lumière issue de la fluorescence des échantillons et couplée dans les mêmes premières ou secondes fibres optiques.

Ainsi, l'invention permet de réaliser un dispositif tel qu'un lecteur de microplaques compact, facile à utiliser et adapté à une utilisation sur le terrain, éventuellement en autonomie électrique :
- L'illumination des échantillons dans les micropuits et collecte de la lumière est effectuée simultanément, en parallèle, grâce à la mise en oeuvre des premières et des secondes fibres optiques. En outre l'acquisition des mesures est rapide ;
- La mesure ne nécessite pas de déplacements de la microplaque relativement au système de mesure, ce qui permet d'améliorer considérablement la compacité du système et sa consommation énergétique. Le recours aux fibres optiques permet également d'améliorer la compacité ;
- La détection peut être effectuée pour tous les canaux de mesure simultanément sur un détecteur matriciel unique (par exemple un CCD), ce qui permet de réduire le coût et la complexité ;
- L'architecture du système permet, avec un minimum de composants mobiles, de réaliser une grande variété de configurations, pour s'adapter aisément à une grande variété de situations de mesure ;
- Cette adaptation peut être réalisée automatiquement, selon des recettes ou des protocoles préétablis, ce qui permet une mise en oeuvre même par des opérateurs non spécialisés.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre une vue schématique d'un dispositif selon l'invention, selon une première configuration de mesure pour effectuer des mesures de fluorescences par une première face des échantillons,
- la figure 2 illustre une vue schématique de dispositif selon l'invention, selon une seconde configuration de mesure pour effectuer des mesures de fluorescences par une seconde face des échantillons,
- la figure 3 illustre une vue schématique de dispositif selon l'invention, selon une troisième configuration de mesure pour effectuer des mesures d'absorbance en transmission,
- la figure 4 illustre une vue de dessus d'un mode de réalisation de dispositif selon l'invention.

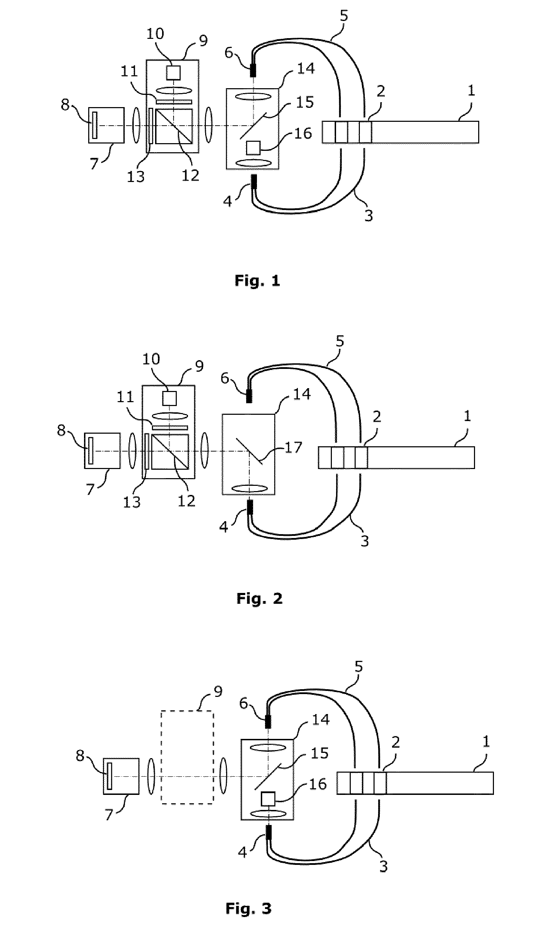

On va décrire, en référence aux figures 1 à 4, un mode de réalisation de dispositif selon l'invention réalisé sous la forme d'un lecteur de microplaques à 96 puits.

Ces microplaques 1 sont de dimensions normalisée et comprennent 96 puits 2 ou cavités destinées à recevoir les échantillons à mesurer, éventuellement mélangés avec des réactifs. Suivant les modèles, les puits 2 peuvent avoir des fonds opaques ou transparents.

Le dispositif selon l'invention comprend un logement ou un tiroir 20 destiné à recevoir une microplaque 1.

Ce logement comprend des moyens d'agitation mécanique pour agiter la microplaque 1 et mélanger des produits dans les puits, avec un moteur pour les mettre en mouvement. Il comprend également des moyens de chauffage avec des résistances électriques pour chauffer la microplaque 1, par exemple afin d'effectuer des incubations ou pour maintenir les produits à analyser dans des conditions de température précises.

Le dispositif selon l'invention est conçu de telle sorte à permettre les mesures optiques suivantes :
- des mesures en transmission au travers des puits 2, ce qui permet de réaliser en particulier des mesures d'absorbance ou de densité optique (DO) ;
- des mesures en rétrodiffusion, ce qui permet de réaliser en particulier des mesures de fluorescence sur les échantillons contenus dans les puits 2.

Le dispositif selon l'invention est en outre conçu de telle sorte à permettre la réalisation de mesures en rétrodiffusion depuis les deux faces de la microplaque 1, afin de pouvoir s'adapter à une grande variété de conditions de mesure.

Suivant un aspect particulièrement innovant, le dispositif selon l'invention comprend deux faisceaux de fibres optiques multimodes 3, 5 qui permettent de diriger la lumière vers les échantillons et/ou de collecter la lumière issue de ces échantillons simultanément, pour tous les puits 2 considérés, sans nécessiter de déplacement relatif de la microplaque 1 et du système de mesure.

Un premier faisceau de fibres optiques 3 est disposé selon une première face de la microplaque 1. Il comprend des premières fibres optiques multimodes 3 regroupées en faisceau selon une extrémité proximale 4 pour pouvoir être couplées au système optique, et dont les extrémités opposées ou distales sont réparties selon la surface de la microplaque, chacune en regard d'un puits 2.

Un second faisceau de fibres optiques multimodes 5 est disposé selon une seconde face de la microplaque 1 opposée à la première face. Il comprend des secondes fibres optiques 5 regroupées en faisceau selon une extrémité proximale 6 pour pouvoir être couplées au système optique, et dont les extrémités opposées ou distales sont réparties selon la surface de la microplaque, chacune en regard d'un puits 2.

Les extrémités distales des premières fibres optiques 3 et des secondes fibres optiques 5 sont placées face-à-face, de part et d'autres des emplacements des puits 2 de la microplaque 1 lorsque celle-ci est en position de mesure dans son logement ou tiroir 20. Elles sont maintenues en position par un support de fibres 23, et pourvues d'optiques de collimation, de telle sorte à permettre un couplage optique au travers du puits 2 de la lumière issue d'une fibre optique dans la fibre optique opposée.

Les support de fibres 23 sont conçus de telle sorte a assurer un positionnement des fibres optiques en face des puits 2 lorsque la microplaque 1 est en position de mesure. Ces supports de fibres 23 supportent également les optiques de collimation.

Il est à noter que dans les figures 1 à 3, seules deux premières et secondes fibres optiques 3, 5 et deux puits 2 sont représentés pour des raisons de clarté, mais il est entendu que le dispositif comprend au moins autant de premières fibres optiques 3 et autant de secondes fibres optiques 5 que la microplaque 1 comprend de puits 2 à analyser simultanément.

Suivant des modes de réalisation, le dispositif selon l'invention peut comprendre une pluralité de premières fibres optiques 3 et/ou une pluralité de secondes fibres optiques 5 en face de chaque puits 2.

Suivant un autre aspect innovant, le dispositif selon l'invention comprend un détecteur matriciel 8 unique, sous la forme d'une caméra 7 avec un détecteur CCD 8, qui est utilisable dans toutes les configurations de mesure.

Le dispositif selon l'invention comprend également un système optique d'imagerie, composé notamment de lentilles, qui permet d'imager l'extrémité des premières fibres optiques 3 ou des secondes fibres optiques 5, suivant la configuration, sur le détecteur CCD 8. Ainsi, les signaux issus des puits 2 de la microplaque 1 sont imagés sur le détecteur 8 à des positions différentes sur sa surface, ce qui permet de les détecter simultanément en les distinguant les uns des autres. La lumière issue de chaque fibre des premières fibres optiques 3 ou des secondes fibres optiques 5 forme ainsi un spot à une position distincte à la surface du détecteur CCD 8. La position à la surface du détecteur CCD 8 du spot correspondant à chaque fibre et donc à chaque puits 2 peut être déterminée dans une étape préalable de calibration du détecteur 8. Elle peut également être déterminée, ou affinée, à partir d'une analyse de l'image formée sur la surface du détecteur CCD 8 par tous les spots.

Comme expliqué précédemment, le dispositif selon l'invention permet d'effectuer des mesures suivant plusieurs modes de mesure, dont des mesures d'absorbance en transmission et des mesures de fluorescence en réflexion par l'une ou l'autre face de la microplaque 1.

La sélection du mode de mesure est effectuée en configurant le système optique, au moyen de deux éléments mobiles :
- des moyens de couplage optiques mobiles 14, qui permettent notamment de sélectionner le faisceau de fibres optiques couplé avec la caméra 7, et qui comprennent des premiers moyens d'illumination 16;
- un module d'éclairage 9, inséré entre la caméra 7 et les moyens de couplage optiques mobiles 14, et qui comprend des seconds moyens d'illumination 10.

Ainsi, il est possible de réaliser toutes les configurations optiques utiles avec un minimum d'éléments mobiles.

Les moyens de couplage optiques mobiles 14 comprennent un premier chariot 21 qui peut se déplacer en translation entre deux positions :
- Dans une première position, on se trouve dans la configuration des figures 1 et 3 : La caméra est optiquement couplée avec les fibres du second faisceau de fibres 5 par l'intermédiaire d'un miroir 15, et les premiers moyens d'illumination 16 sont optiquement couplés avec les fibres du premier faisceau de fibres optiques 3 ;
- Dans une seconde position, on se trouve dans la configuration de la figure 2 : La caméra est optiquement couplée avec les fibres du premier faisceau de fibres 3 par l'intermédiaire d'un autre miroir 17.

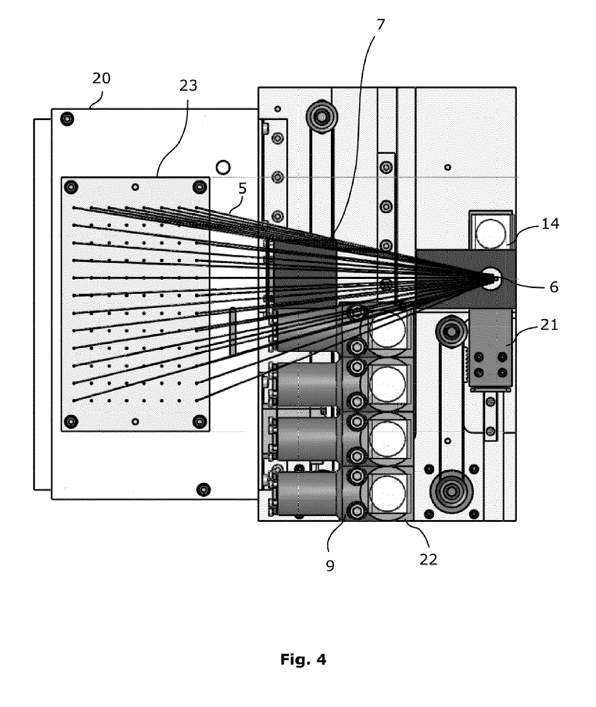

Le dispositif selon l'invention comprend en outre un second chariot mobile 22 apte à recevoir une pluralité de modules d'éclairage 9. En déplaçant ce second chariot 22 en translation, on peut ainsi changer le module d'éclairage 9 inséré entre la caméra 7 et les moyens de couplage optiques mobiles 14, ou, selon la configuration illustrée à la figure 4, n'insérer aucun module 9 ou un module 9 vide.

Plus précisément, dans la configuration illustrée à la figure 4, le second chariot mobile 22 comprend quatre modules d'éclairage 9 et un emplacement vide. Il est représenté positionné de telle sorte que l'emplacement vide soit entre la caméra 7 et les moyens de couplage optiques mobiles 14.

Il est à noter que la caméra 7 et les extrémités des premières fibres optiques 3 et des secondes fibres optiques 5 sont fixes par rapport au dispositif. Toutes les configurations de mesures peuvent être obtenues en déplaçant les moyens de couplage optiques mobiles 14 et/ou le chariot 22 qui supporte les modules d'éclairage 9.

La figure 1 illustre une première configuration de mesure du dispositif selon l'invention, qui permet d'effectuer des mesures de fluorescence par l'intermédiaire des secondes fibres optiques 5.

Les moyens de couplage optiques mobiles 14 sont placés dans une position qui permet le couplage avec les fibres du second faisceau de fibres 5. Les premiers moyens d'illumination 16 sont éteints.

Un module d'éclairage 9 est inséré devant la caméra 7. Il comprend une source de lumière 10 avec au moins une diode électroluminescente (DEL) qui émet une lumière à au moins une longueur d'onde d'excitation. Un filtre optique d'excitation 11 placé devant cette source 10 permet de sélectionner les longueurs d'onde d'excitation.

La lumière de la source est dirigée par un élément dichroïque 12 vers l'extrémité proximale 6 des secondes fibres optiques 5, de telle sorte à illuminer simultanément tous les échantillons dans les puits 2. La fluorescence générée au niveau des échantillons est également captée par les secondes fibres optiques 5, en rétrodiffusion, et dirigée vers le détecteur 8 de la caméra 7. L'élément dichroïque 12 assure la transmission de la lumière aux longueurs d'onde de fluorescence vers la caméra 7. Un filtre optique d'émission 13 placé devant cette caméra 7 bloque les longueurs d'onde autres que les longueurs d'onde d'intérêt.

Les modules d'éclairage 9 peuvent être adaptés à une utilisation par exemple avec des réactifs particuliers. Ainsi, en changeant le module d'éclairage 9, ou peut par exemple illuminer des échantillons à des longueurs d'onde d'excitation différentes et faire des mesures de fluorescence également à des longueurs d'onde différentes.

Les modules d'éclairage 9, ou du moins certains d'entre eux, peuvent comprendre plusieurs sources de type LED, ce qui permet avec un module 9 de pouvoir effectuer des éclairages à plusieurs longueurs d'ondes en allumant sélectivement les sources. Les sources peuvent être couplées sur un barreau optique d'homogénéisation qui assure en sortie une illumination homogène quelque soit la source mise en oeuvre.

Un barreau optique d'homogénéisation est un élément en verre transparent, de section hexagonale ou carrée. Les sources de lumières sont couplées à une extrémité du barreau. Du fait des multiples réflexions internes dans le barreau, on obtient à l'autre extrémité du barreau une lumière avec une bonne homogénéité spatiale, même si les sources de lumière couplées sont peu homogènes.

La figure 2 illustre une seconde configuration de mesure du dispositif selon l'invention, qui permet d'effectuer des mesures de fluorescence par l'intermédiaire des premières fibres optiques 3.

Cette configuration de mesure diffère de la configuration de mesure de la figure 1 en ce que les moyens de couplage optiques mobiles 14 sont placée dans une position qui permet le couplage avec les fibres du premier faisceau de fibres 3.

Il est ainsi possible d'effectuer des mesures de fluorescence depuis la face avant ou arrière de la microplaque, en fonction des contraintes de mise en oeuvre.

La figure 3 illustre une troisième configuration de mesure du dispositif selon l'invention, qui permet d'effectuer des mesures d'absorbance, en transmission.

Les moyens de couplage optiques mobiles 14 sont placés dans une position qui permet le couplage de la caméra 7 avec les fibres du second faisceau de fibres 5, et le couplage des premiers moyens d'illumination 16 avec les fibres du premier faisceau de fibres optiques 3.

Les premiers moyens d'illumination 16 comprennent une source de lumière de type diode électroluminescente (DEL), ou, suivant les modes de réalisation, plusieurs source de lumière de type diode électroluminescente (DEL) couplées sur un barreau optique d'homogénéisation qui assure en sortie une illumination homogène quelque soit la source mise en oeuvre.

La présence de plusieurs sources permet d'effectuer des mesures d'absorbance à différentes longueurs d'ondes, en allumant sélectivement les sources.

La lumière de la source 16 est guidée simultanément jusqu'aux échantillons dans les puits 2 par les premières fibres optiques 3. La lumière qui traverse les échantillons est collectée par les secondes fibres optiques 5 et amenée jusqu'au détecteur matriciel 8.

Dans cette configuration, il n'y a pas de module d'éclairage 9 inséré devant la caméra 7. Il peut toutefois éventuellement y avoir un module d'éclairage 9 laissé en place, à condition qu'il soit compatible au niveau de ses caractéristiques spectrales et que la seconde source 10 soit éteinte.

Selon un exemple de configuration non limitatif, le dispositif selon l'invention comprend des premiers moyens d'illumination 16 avec cinq sources lumineuses de type LED couplées sur un barreau d'homogénéisation, et un emplacement pour une sixième LED. Ces sources lumineuses peuvent être allumées individuellement pour effectuer des mesures d'absorbance en transmission selon la configuration de la figure 3, sans module d'éclairage 9 dans le circuit optique. Les longueurs d'ondes des sources lumineuses et les applications visées (ou chromophores recherchés) sont résumées dans le tableau suivant :

| LED | Application visée ou chromophore recherché |
|---|---|
| 450 nm | complexe phosphovanadomolybdique (Dosage de Misson) |
| 540 nm | composé azo aromatique (Dosage de Griess) |
| 405 nm | para-nitrophenol (Produit de réaction de la phosphatase sur le substrat para-nitrophenyl phosphate - pNPP) |
| 600 nm | vert de malachite |
| 630 nm | Turbidité et précipités divers |

Selon le même exemple de configuration, le dispositif selon **l'invention** comprend trois modules d'éclairage 9 montés sur le second chariot mobile 22. Ce second chariot mobile 22 comprend en outre un emplacement pour un quatrième module d'éclairage 9 et un emplacement vide pour permettre les mesures d'absorbance.

Chaque module d'éclairage 9 comprend une source 10 avec une seule LED, ainsi qu'un filtre d'excitation 11, une lame dichroïque 12 et un filtre d'émission 13 adaptés.

Les modules d'éclairage 9 permettent d'effectuer des mesures de fluorescence selon les configurations des figures 1 ou 2. Les longueurs d'ondes des sources lumineuses 10 et les fluorophores recherchés sont résumés dans le tableau suivant :

| LED | Fluorophore |
|---|---|
| 540 nm | Resazurin |
| 420 nm | Isoindole (Dosage de Roth) |
| 340 nm | N-(1-naphthyl)ethylenediamine |

En outre, le dispositif selon l'invention est conçu de telle sorte que les sources 10 des modules d'éclairage 9 peuvent accueillir jusqu'à trois LEDs :
- ces LEDs peuvent être ainsi multiplexées dans un même module d'éclairage 9 avec un filtre d'excitation 11 à bande large, et être activées indépendamment afin de détecter, avec un même module d'éclairage 9, plusieurs fluorophores excités à des longueurs d'ondes différentes mais qui émettent à une même longueur d'onde ;
- ces LEDs peuvent aussi être multiplexées dans un même module d'éclairage 9 avec des filtre d'excitation 11 et d'émission 13 multi-bandes pour détecter, avec un seul module d'éclairage 9, plusieurs fluorophores excités à des longueurs d'ondes différentes et émettant à des longueurs d'onde également différentes.

Ainsi, il est possible de réaliser des configurations permettant de détecter jusqu'à 3 x 4 = 12 fluorophores différents avec un même dispositif en utilisant trois LEDs multiplexées pour chaque source 10 et des filtres d'excitation 11 et d'émission 13 tri-bandes sur chacun des quatre modules d'éclairage 9.

Comme expliqué précédemment, un dispositif selon l'invention peut être réalisé pour pouvoir être mis en oeuvre avec toutes sortes de microplaques, moyennent les adaptations évidentes pour l'homme du métier.

Le dispositif selon l'invention est particulièrement bien adapté à la mise en oeuvre de kits de mesure dans lesquels des microplaques, par exemple à 96 puits, sont fournies avec les réactifs nécessaires. Dans ce cas, un exemple non-limitatif de protocole de mesure peut être le suivant :
- L'opérateur remplit les 96 puits de la microplaque ;
- Il l'insère dans le tiroir 20 du lecteur de microplaques ;
- Il paramètre le lecteur, en sélectionnant le type d'analyse et/ou le Kit. Alternativement, les kits peuvent être pourvus d'un moyen d'identification (code barre, puce RFID) permettant au lecteur de les identifier et de se paramétrer automatiquement ;
- Le lecteur procède éventuellement à une agitation pour mélanger les échantillons aux réactifs ;
- L'instrument procède ensuite éventuellement à une culture par le biais de cycles thermiques.
- Ensuite une analyse optique est réalisée au moyen d'une ou plusieurs configuration de mesure précédemment décrite ;
- Le traitement restitue 96 mesures de fluorescence et/ou d'absorption de l'échantillon. Ces mesures sont converties en concentration de l'échantillon (réponse linéaire ou polynomiale), par exemple en utilisant une courbe d'étalonnage prédéfinie pour chaque kit ;
- Un délai ou une temporisation peut éventuellement être introduit avant ou entre les différentes étapes (incubation, agitation, lecture...) ;
- Les différentes étapes peuvent être répétées de manière itérative afin de réaliser des cinétiques sur une période définie.

Suivant des variantes de modes de réalisation, le dispositif selon l'invention peut comprendre des logements tiroirs 20 interchangeables et adaptés à différents types de microplaques 1, notamment avec des nombres de puits différents. Il peut également comprendre des supports de fibres 23 interchangeables, également adaptés aux dispositions particulières de plaques 1. Dans ce cas, les faisceaux de premières et secondes fibres 3, 5 peuvent également être interchangeables.

Suivant des variantes de modes de réalisation, le dispositif selon l'invention peut être conçu de telle sorte que les premières fibres optiques 3 soient positionnées du côté de la face inférieure de la microplaque 1, donc face au fond des puits 2. Alternativement le dispositif selon l'invention peut être conçu de telle sorte que les premières fibres optiques 3 soient positionnées du côté de la face supérieure de la microplaque 1, donc face à l'ouverture des puits 2. Bien entendu, dans les deux cas les secondes fibres optiques 5 sont positionnées du côté de la face opposée de la microplaque 1 relativement aux premières fibres optiques 3.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif pour effectuer des mesures optiques telles que des mesures de fluorescence et d'absorbance sur des échantillons répartis selon des sites de mesure (2) sur un support (1), comprenant :
- des premiers moyens d'illumination (16),
- des moyens de détection optique (7, 8),
- des premières fibres optiques (3) avec une extrémité disposée en regard des sites de mesure (2) selon une première face du support (1), **caractérisé en ce qu'**il comprend en outre :
- des seconds moyens d'illumination (10),
- des secondes fibres optiques (5) avec une extrémité disposée en regard desdits sites de mesure (2) selon une seconde face du support (1) opposée à la première face, et
- des moyens de configuration optique (9, 14) configurables de telle sorte à permettre la configuration suivante :
(i) couplage optique des premiers moyens d'illumination (16) avec les premières fibres optiques (3) et des moyens de détection optique (7, 8) avec les secondes fibres optiques (5),
et au moins l'une des configurations suivantes :
(ii) couplage optique des seconds moyens d'illumination (10) et des moyens de détection optique (7, 8) avec les secondes fibres optiques (5),
(iii) couplage optique des seconds moyens d'illumination (10) et des moyens de détection optique (7, 8) avec les premières fibres optiques (3).

2. le dispositif de la revendication 1, dans lequel les moyens de configuration optique comprennent un élément de couplage mobile (14) supportant les premiers moyens d'illumination (16) et des moyens optiques de renvoi (15, 17), lequel élément de couplage mobile (14) étant apte à se déplacer de telle sorte que :
- dans une première position, les premiers moyens d'illumination (16) sont couplés optiquement avec les premières fibres optiques (3), et les moyens de détection optique (7, 8) sont couplés optiquement avec les secondes fibres optiques (5) par l'intermédiaire des moyens optiques de renvoi (15);
- dans une seconde position, les moyens de détection optique (7, 8) sont couplés optiquement avec lesdites premières fibres optiques (3) par l'intermédiaire des moyens optiques de renvoi (17).

3. Le dispositif de l'une des revendications précédentes, dans lequel les premières et les secondes fibres optiques (3, 5) sont respectivement regroupées sous forme de faisceau (4, 6) du côté des moyens de configuration optique (9, 14).

4. Le dispositif de l'une des revendications précédentes, dans lequel les moyens de détection optique comprennent un détecteur matriciel (8) apte à collecter la lumière issue des premières ou des secondes fibres optiques (3, 5).

5. Le dispositif de l'une des revendications précédentes, dans lequel les premiers moyens d'illumination (16) comprennent une source de type diode électroluminescente (DEL), ou une pluralité de sources de type diode électroluminescente (DEL) couplées par un barreau optique d'homogénéisation.

6. le dispositif de l'une des revendications précédentes, dans lequel les moyens de configuration optique comprennent en outre au moins un module d'éclairage (9) apte à être inséré devant les moyens de détection optique (7, 8), lequel module comprenant des seconds moyens d'illumination (10), et un élément partiellement réfléchissant (12) apte à (i) transmettre au moins une partie de la lumière desdits seconds moyens d'illumination (10) vers les moyens de couplage et (ii) transmettre au moins une partie de la lumière issue des moyens de couplage vers les moyens de détection optique.

7. Le dispositif de la revendication 6, dans lequel l'élément partiellement réfléchissant (12) comprend un élément dichroïque.

8. Le dispositif de l'une des revendications 6 ou 7, dans lequel les seconds moyens d'illumination (10) comprennent une source de type diode électroluminescente (DEL), ou une pluralité de sources de type diode électroluminescente (DEL) couplées par un barreau optique d'homogénéisation.

9. Le dispositif de l'une des revendications 6 à 8, qui comprend une pluralité de modules d'éclairage (9), et des moyens (22) pour changer ou retirer le module d'éclairage (9) inséré devant les moyens de détection optique (7, 8).

10. Le dispositif de l'une des revendications précédentes, qui est adapté à l'utilisation de supports (1) de type microplaques à 96 puits constituant les sites de mesure (2).

11. Le dispositif de la revendication 10, qui comprend en outre des moyens pour identifier des microplaques (1) issues de kits prédéfinis.

12. Le dispositif de l'une des revendications précédentes, qui comprend en outre des moyens d'agitation du support (1) et/ou des moyens de chauffage du support (1).

13. Le dispositif de l'une des revendications précédentes, qui comprend en outre des moyens d'alimentation électrique autonomes de type batterie.

14. Procédé pour effectuer des mesures optiques telles que des mesures de fluorescence et d'absorbance sur des échantillons répartis selon des sites de mesure (2) sur un support (1), mettant en oeuvre des premiers moyens d'illumination (16), des moyens de détection optique (7, 8), des premières fibres optiques (3) avec une extrémité disposée en regard des sites de mesure (2) selon une première face du support (1), des seconds moyens d'illumination (10), des secondes fibres optiques (5) avec une extrémité disposée en regard desdits sites de mesure (2) selon une seconde face du support (1) opposée à la première face, et des moyens de configuration optique (9, 14),
**caractérisé en ce qu'**il comprend des opérations de configuration des moyens de configuration optique (9, 14), de sorte à réaliser la configuration suivante :
(i) couplage optique des premiers moyens d'illumination (16) avec les premières fibres optiques (3) et des moyens de détection optique (7, 8) avec les secondes fibres optiques (5),
et au moins l'une des configurations suivantes :
(ii) couplage optique des seconds moyens d'illumination (10) et des moyens de détection optique (7, 8) avec les secondes fibres optiques (5),
(iii) couplage optique des seconds moyens d'illumination (10) et des moyens de détection optique (7, 8) avec les premières fibres optiques (3).

15. Le procédé de la revendication 14 pour effectuer des mesures d'absorbance, qui comprend des étapes :
- d'illumination des échantillons au moyen des premiers moyens d'illumination (16) couplés dans les premières fibres optiques (3),
- de mesure avec les moyens de détection optique (7, 8) de la lumière transmise au travers des échantillons et couplée dans les secondes fibres optiques (5).

16. Le procédé de la revendication 14 pour effectuer des mesures de fluorescence, qui comprend des étapes :
- d'illumination à une longueur d'onde d'excitation des échantillons au moyen des seconds moyens d'illumination (10) couplés dans les premières ou les secondes fibres optiques (3, 5),
- de mesure avec les moyens de détection optique (7, 8) de la lumière issue de la fluorescence des échantillons et couplée dans les mêmes premières ou secondes fibres optiques (3, 5).
